# EUROPEAN PATENT APPLICATION

(11) **EP 1 175 076 A2**
(43) Date of publication of application: **23.01.2002**
(21) Application number: 01116896.0
(22) Date of filing: 11.07.2001
(51) Int. Cl.: H04M 11/06

(54) **System and method for providing lifeline pots service on intrinsically none-lifeline pots circuits**

(30) Priority: 18.07.2000 US 618914
(71) Applicant: Alcatel USA Sourcing, L.P., Plano, TX 75075 (US)
(72) Inventor: Keller-Tuberg, Stefan Paul, Raleigh, NC 27612 (US); Rzonca, Richard Roger, Raleigh, NC 27613 (US); Tyrrell, Raymond Eugene, Raleigh, NC 27612 (US)
(74) Representative: Dreiss, Fuhlendorf, Steimle & Becker

(57) **Abstract**

A system and method for providing lifeline capability in a derived telephony system using a DSL access circuit. A POTS splitter is provided for separating communication signals into an analog signal portion and at least one data signal portion. At least one analog lifeline telephony station is coupled via an analog lifeline path to the POTS splitter for effectuating an analog lifeline telephony service. A derived telephony network termination (NT) module is coupled to the POTS splitter via one or more data modems, whereby a derived telephony service is effectuated by means of a derived telephony circuit disposed in the derived telephony NT module. A selectively actuatable relay block is disposed between the derived telephony circuit and a derived telephony station wherein the relay block operates to bridge the derived telephony station onto the analog lifeline path when a fault, power failure, or other condition giving rise to a low quality of derived telephony service is monitored by a service selector.

## Description

### BACKGROUND OF THE INVENTION

### Technical Field of the Invention

The present invention relates to telecommunications networks. More particularly, but not by way of any limitation, the present invention relates to a system and method for providing lifeline POTS service on intrinsically non-lifeline POTS circuits such as derived POTS-over-DSL lines.

### Description of Related Art

Digital Subscriber Line (DSL) is a modem technology for converting existing twisted-pair telephone lines into access paths for multimedia and high-speed data communications. Some versions of this technology are asymmetric, with different data rates in the downstream and upstream directions (to and from the subscriber, respectively). Others are symmetric, providing the same data rate both upstream and downstream. Regardless of the version, DSL technology provides three distinct advantages: (i) separation of voice and data communications, (ii) ability to implement the technology incrementally and inexpensively, and (iii) effective utilization of the open market place created by local loop deregulation.

An Asymmetric Digital Subscriber Line (ADSL) circuit connects an ADSL modem on each end of a twisted-pair telephone line, creating three information channels -- a high speed downstream channel, a medium speed duplex channel, and depending on the implementation of the ADSL architecture, a Plain Old Telephone Service (POTS ) or an Integrated Services Digital Network (ISDN) channel. The POTS/ISDN channel is split off from the digital modem by filters or splitters, thus guaranteeing uninterrupted POTS/ISDN connectivity even if ADSL fails (i.e., a "lifeline" service). The high speed channel generally ranges from 1.5 to 6.1 Mbps of throughput, while duplex rates generally range from 16 to 640 kilobits per second (Kbps).

It should be appreciated that high speed data techniques such as DSL have been, and are continuing to be, standardized to permit advantageous sharing of a copper pair between one or more high speed data paths and the regular analog lifeline POTS service. This sharing is, in the case of ADSL, accomplished by partitioning the spectrum on the copper pair such that the lifeline POTS service occupies its normal position and the ADSL data service occupies a part of the spectrum not required or used by the POTS service.

As alluded to hereinabove, it is a characteristic of this and other similar approaches that although the two services (POTS and high speed data) share the same pair of copper wires, they remain independent from each other -- that is, if the high speed data service is disabled for whatever reason (such as, for example, during a local AC power failure), the POTS service may continue to operate independently and without disruption.

Traditionally, when copper access networks were constructed, access carriers "overprovisioned" the number of copper pairs to make an allowance for foreseeable long term growth in the subscription base for their services. However, in may cases, the overprovisioning of copper has been underestimated and spare copper pairs are becoming exhausted. Also, some access carriers are finding that the cost burden of activating and deactivating services (commonly called "churning") has eroded profitability. For these and a number of other reasons, the possibility of using a high speed data pipe to carry multiple POTS services has become an attractive alternative to provisioning separate copper pairs for each POTS service.

When different physical POTS services are encoded and multiplexed together into a high speed digital data channel, the encoded POTS services are said to be "derived." Whereas the use of high speed data channels for delivering packetized POTS services is an advantageous option, such derived services are intrinsically non-lifeline because the service would otherwise be disrupted if there was a loss of power at the subscriber's premises or if there was a network fault with the DSL part of the service.

One of the fundamental characteristics of the traditional analog POTS service is its high availability -- meaning that the equipment and network providing the POTS service have been so designed and dimensioned as to achieve a very high resilience against service disruption due to fault (i.e., fault tolerance). In many areas and parts of the world, this high level of service (lifeline service) is mandated by legislation and/or regulation. But the high availability of traditional lifeline POTS service comes at a cost of increased equipment and power system complexity and redundancy, and associated additional outlay and maintenance costs.

For a regular analog lifeline POTS service, equipment (other than subscribers' telephone handsets) and power supplies are centralized in the sense that the site at which the equipment and power supplies are located serve more than one POTS subscriber and, sometimes, as many as hundreds of thousands of subscribers. The advantage to the access provider of centralization is that the costs providing and maintaining redundant aspects of the service are shared and minimized.

In order to implement derived POTS services over a high speed data channel such as one available in DSL technology, the nature of the transmission technique requires that some active network terminating (NT) equipment reside at the subscriber's location to demultiplex the different derived services. By necessity, these NT devices consume some amount of power and in order to achieve lifeline levels of reliability for the derived services, the power source itself must be at least equally reliable.

Often when active (i.e., power consuming) equipment must be located at a subscriber's premises, the service is implemented so that the power as well as the information signal is fed through the same copper pair or pairs from the access provider's centralized equipment. However, in the case where multiple independent services share the same copper pairs (as in the case of lifeline POTS and high speed ADSL data, for example), no known straightforward techniques are available to deliver the multiple network services in conjunction with power over the same copper pairs without affecting the nature of some the network services in some manner.

Typically, this problem is overcome by providing batteries at the subscriber's location and using power sourced thereat to maintain the batteries in a charged state. In the case of power outage, the batteries at the subscriber's premises provide power to the subscriber's NT equipment. However, this approach introduces additional problems including, for example, the problem of maintaining the batteries at each individual's premises in good working order and charge, the additional cost of batteries and power regulation circuits at the subscriber's premises, and the additional cost of power to be borne by the subscriber (which is not incurred by subscribers who receive network powering).

### SUMMARY OF THE INVENTION

Accordingly, the present invention advantageously provides an arrangement wherein a lifeline POTS service (high availability POTS) is effectuated on an intrinsically non-lifeline POTS circuit (such as a derived POTS circuit in DSL-based access circuits) without the aforementioned drawbacks of the state of the art. Further, the present invention avoids the necessity for the additional cost and complexity of subscriber equipment and facilities to make lifeline POTS service available on all derived POTS lines while still ensuring that all the derived POTS lines have the characteristics of a lifeline service.

In one aspect, the present invention is directed to a derived lifeline telephone service system using a DSL access circuit. A POTS splitter is provided for separating signals from the access network into an analog signal portion and at least one data signal portion. The analog signal portion supports an analog lifeline telephone service using one or more analog lifeline POTS stations coupled to the POTS splitter via an analog lifeline path. A derived telephony circuit is coupled to the splitter via a data service modem, wherein the derived telephony circuit receives the at least one data signal portion to provide a derived telephony service. One or more derived telephony stations are included in association with the derived telephony service. A relay block is coupled to the analog lifeline path and the derived telephony station(s) such that it operates to switch the derived telephony station(s) to the analog lifeline path when the derived telephony service begins to deteriorate in quality due to a predetermined condition, for example, an imminent power outage or a fault, et cetera, monitored by a service selector.

In another aspect, the present invention is directed to a derived lifeline telephony system which comprises a splitter coupled to a DSL access network for separating signals into an analog signal portion and a plurality of data signal portions, wherein the analog signal portion supports an analog lifeline telephone service via an analog lifeline path. A plurality of data modems are coupled to the splitter to receive data signal portions, wherein a select one of the data modems is coupled to a data service path for providing a data service via a data service terminal. A derived telephony network termination (NT) module is coupled to at least a portion of the data modems. The derived telephony NT module operates to provide a tip-and-ring interface to at least one derived telephony station for supporting a derived telephony service. A service selector monitors power, quality of service, fault conditions, etc. so as to configure a relay block disposed in the derived telephony NT module to bridge the at least one derived telephony station to the analog lifeline path in response to the monitored condition or conditions.

In yet further aspect, the present invention relates to a method for providing lifeline capability in a derived telephony system using a DSL access circuit. The method provides for splitting communication signals into an analog signal portion and at least one data signal portion, wherein the analog signal portion is provided to at least one analog lifeline telephone station via an analog lifeline path for effectuating an analog lifeline telephony service. The data signal portion is provided to a derived telephony circuit disposed in a derived telephony NT module. The derived telephony circuit operates to support a derived telephony service via a relay block coupled to a derived telephone station. The derived telephone station is switched to the analog lifeline path by actuating the relay block by a service selector responsive to a predetermined condition that is monitored in the derived telephony system.

### BRIEF DESCRIPTION OF THE DRAWINGS

A more complete understanding of the present invention may be had by reference to the following Detailed Description when taken in conjunction with the accompanying drawings wherein:
FIG. 1 depicts an exemplary embodiment of a telecommunications network having an access network portion wherein the teachings of the present invention may be advantageously practiced;
FIG. 2 depicts an exemplary embodiment of a derived lifeline telephony service system provided in accordance with the teachings of the present invention; and
FIG. 3 is a flow chart of the steps involved in effectuating a derived lifeline telephony service in accordance with the teachings of the present invention.

### DETAILED DESCRIPTION OF THE DRAWINGS

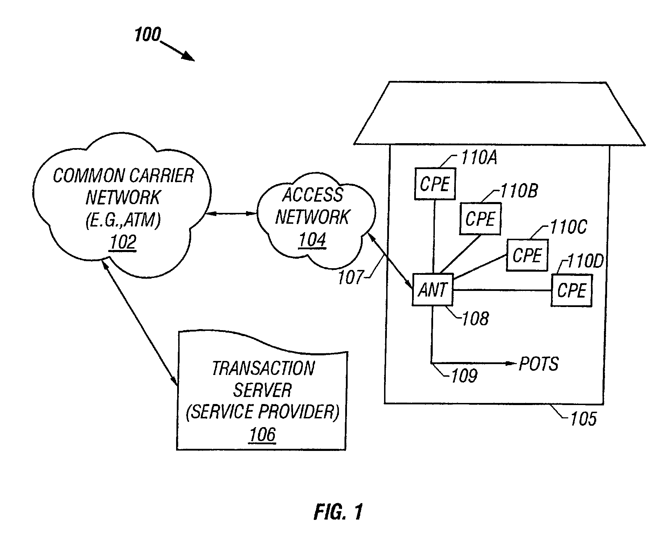

In the drawings, like or similar elements are designated with identical reference numerals throughout the several views thereof, and the various elements depicted are not necessarily drawn to scale. Referring now to FIG. 1, depicted therein is an exemplary telecommunications network 100 having a DSL access network portion 104 that is provided between a high-speed common carrier network 102 such as an ATM network core (i.e., "backbone") and customer/subscriber premises 105. A transaction server 106, coupled to the common carrier network core 102, is illustrative of a service provider with respect to various services that may be accessed via one or more customer premises equipment (CPE) units, e.g., 110A - 110D, provided at the customer premises 105.
Those skilled in the art should readily appreciate upon reference hereto that the telecommunications network 100 of FIG. 1 is illustrative of a network that provides a bidirectional end-to-end ATM connection using DSL access network architecture. Accordingly, although not shown in this FIG. explicitly, it should be understood that the access network portion 104 preferably comprises DSL Access Multiplexers (DSLAM modules) (which are also sometimes referred to as ADSL Access Multiplexers or ASAMs when ADSL is used) for concentrating a plurality of DSL lines (e.g., line 107) into a single, broadband ATM connection, units with POTS splitter functionality, Line Terminal (LT) functionality, SONET/SDH Network Terminations (NTs), etc. As is well known, the POTS splitter units are connected to the PSTN to allow the use of the POTS service.
Furthermore, the DSL channels and the POTS service are typically Frequency Division Multiplexed (FDM) on a twisted pair of wires ("copper pair") to the customer premises 105 (e.g., subscriber's home or office, etc.).

An ADSL Network Termination (ANT) module 108 provided at the customer premises 105 contains a POTS splitter to mux and de-mux the ADSL channels (data service channels) and the POTS service. Also, the ADSL signals (carrying, for example, ATM cells) are modulated/demodulated by the ANT 108. The ATM cells may be received from or sent to a CPE unit such as, e.g., a Set Top Box (STB), for accessing an Interactive Video-on-Demand (IVOD) service, et cetera. In addition, the ATM cell traffic may be used in connection with another CPE unit, e.g., a computer (which can be a personal computer, a laptop computer, a notebook computer, or a hand-held computer, and the like), for a data service such as an Internet-based service. An analog POTS line 109 is split off from the ANT 108 for providing analog lifeline telephony service. The ADSL LT module in the access network portion 104 and the ANT 108 comprise a Discrete Multi-Tone (DMT) transceiver and are sometimes referred to as ADSL Termination Unit - Central (ATU-C) and ADSL Termination Unit - Remote (ATU-R), respectively.

In an exemplary embodiment, connections between the ANT 108 and the CPE units (collectively, data service terminals) within the customer premises 105 may be effectuated via appropriate native data interfaces e.g., using an ATM-compliant physical medium interface (operating at 25.6 Mbps, for instance) or an Ethernet interface. Also, the ANT 108 may be provided as a "multi-drop" module capable of connecting to multiple CPEs (as illustrated in FIG. 1) or as a modem device coupled to a single CPE unit.

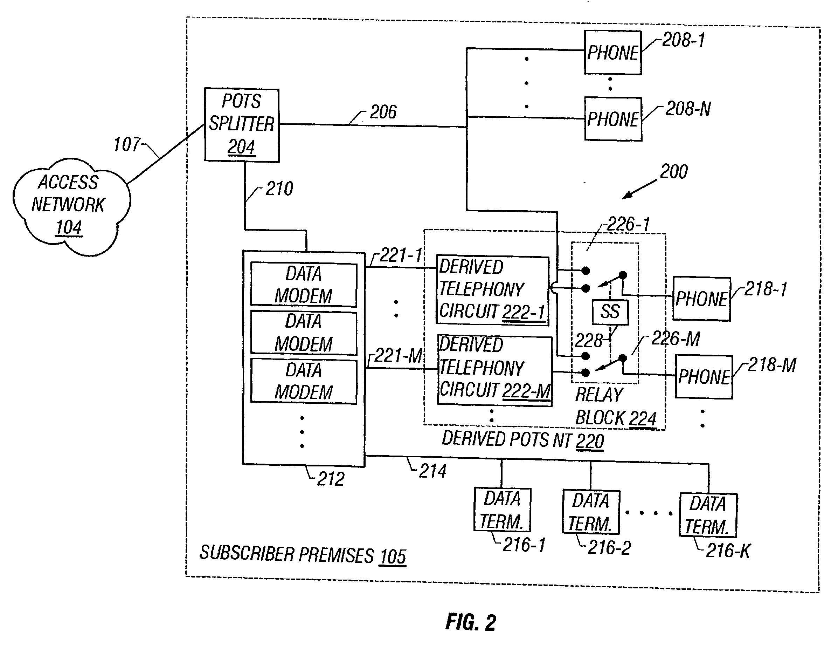

FIG. 2 depicts an exemplary embodiment of a derived lifeline telephony service system 200 provided in accordance with the teachings of the present invention. As alluded to hereinabove, a POTS splitter 204 provided at the customer/subscriber premises 105 has the responsibility of segregating an analog signal portion from one or more data signal portions in the direction from the access network 104 towards the subscriber premises. The analog signal portion is provided for supporting a high availability analog lifeline POTS service via an analog lifeline path 206. In the reverse direction (from the subscriber towards the access network 104), the POTS splitter 204 combines the lifeline POTS signal(s) with the high speed data service signals. As a result of this splitting and combining function, the POTS splitter 204 presents a "tip-and-ring" interface carrying the basic lifeline POTS service towards the subscriber's in-premise wiring to which one or more lifeline POTS phones (or telephony stations), e.g., phones 208-1 through 208-N, are coupled.

The POTS splitter 204 is provided with one or more secondary interfaces (e.g., interface 210) which carry the data signal portions towards a data modem bank 212 comprising one or more data modems. The data modems process the data signal portions into a number of streams which include one or more data service streams towards a plurality of data service terminals 216-1 through 216-K via a data service path (e.g., reference numeral 214) and one or more streams (e.g., reference numerals 221-1 through 221-M) towards a derived POTS NT module 220 for supporting one or more derived telephony services.

The derived POTS NT module 220 comprises a plurality of derived telephony circuits (reference numerals 222-1 through 222-M) which perform a conversion between the information format required to transport POTS signals across the high speed data transport infrastructure and the analog POTS over tip-and-ring format normally used for delivering the basic POTS service.

A plurality of derived telephony stations (reference numerals 218-1 through 218-M) having a tip-and-ring interface are provided for effectuating derived telephony services supported by the derived telephony circuits. In accordance with the teachings of the present invention, a relay block 224 actuated by a service selector (SS) 228 is provided in the derived POTS NT module 220 for selectively coupling each of the derived telephony stations 218-1 through 218-M to either a corresponding derived telephony circuit or the analog lifeline POTS interface via the analog lifeline path 206. Preferably, one or more relays 226-1 through 226-M are provided in the relay block 224 such that the common node of each of the relays can be selectively coupled to either the derived telephony interface or the analog lifeline interface.

As part of its normal operation, the service selector 228 monitors the integrity and quality of service (QoS) with respect to each individual derived telephony (POTS) service and ensures that the service selection relay associated with each derived tip-and-ring pair is switched towards the corresponding derived POTS circuit only when the derived POTS service is operational and/or meets certain performance and quality criterion or criteria. In the event a fault or disruption is encountered with respect to any of the derived POTS circuits or with the derived POTS service, the service selector 228 configures the associated relay such that the particular derived POTS tip-and-ring interface is bridged onto the lifeline POTS circuit via the analog lifeline path 206. Furthermore, in the event the service selector 228 encounters a fault or power outage, the relays preferably automatically default to the position which bridges the derived tip-and-ring interfaces with the analog lifeline POTS interface. Accordingly, at all times, telephony devices (reference numerals 218-1 through 218-M) connected to the derived tip-and-ring interfaces on the derived POTS NT module 220 receive dial tone either from the functioning derived POTS service or, in the case of a fault condition, from the analog lifeline POTS service which the subscriber receives in conjunction with the high speed data service(s).

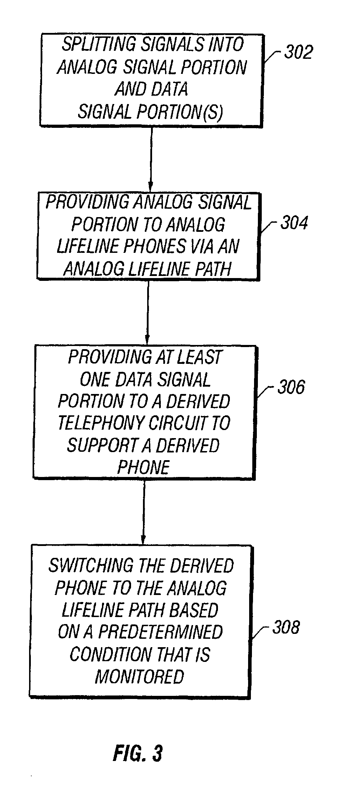

Referring now to FIG. 3, depicted therein is a flow chart of the steps involved in effectuating a derived lifeline telephony service in accordance with the teachings of the present invention as set forth hereinabove. After separating the communication signals into an analog signal portion and data signal portions (step 302), an analog lifeline POTS service is effectuated by means of an analog lifeline path and one or more analog lifeline phones (step 304). At least one of the data signal portions is provided to a derived telephony circuit through a data modem for supporting a derived telephony service via a derived telephony station (step 306). A relay is selectively actuated by a service selector so as to switch or bridge the derived telephony station onto the analog lifeline path based on a predetermined condition that is monitored by the service selector.

Based upon the foregoing Detailed Description, it should be readily apparent that the present invention provides a robust yet straightforward solution for effectuating a lifeline-quality service on an intrinsically non-lifeline derived POTS circuit provided in conjunction with DSL-based access networks. The derived lifeline telephony service system of the present invention overcomes the shortcomings and deficiencies of the state of the art by advantageously avoiding the costs involved in redundant power supply equipment typically required for high availability POTS service. Moreover, because complexity of the subscriber equipment and derived voice network equipment is reduced, maintenance costs are also concomitantly reduced thereby.

Further, it is believed that the operation and construction of the present invention will be apparent from the foregoing Detailed Description. While the method and apparatus shown and described have been characterized as being preferred, it should be readily understood that various changes and modifications could be made therein without departing from the scope of the present invention as set forth in the following claims.- For example, although the functional components of the present invention (e.g., the POTS splitter, data modem(s), and derived POTS NT module) have been described in the foregoing as separate components, it should be recognized that these functional components may be embodied into a single integrated unit or could be provided as any sub-combination thereof. Also, the present invention may be practiced with any type of DSL technology used in the access circuits wherein the analog POTS is segregated for providing lifeline capability. Accordingly, all these numerous modifications, substitutions, additions, combinations, extensions, et cetera, are considered to be within the ambit of the present invention whose scope is limited solely by the following claims.

## Claims

1. A derived lifeline telephone service system using a Digital Subscriber Line (DSL) access circuit, comprising:
a splitter coupled to an access network for separating signals into an analog signal portion and at least one data signal portion, wherein said analog signal portion supports an analog lifeline telephone service;
a derived telephony circuit coupled to said splitter via a data service modem, said derived telephony circuit receiving said at least one data signal portion to provide a derived telephony service;
an analog lifeline telephony station coupled to said splitter via an analog lifeline path carrying said analog signal portion;
a derived telephony station coupled to said derived telephony circuit to effectuate said derived telephony service; and
a service selector for monitoring said derived telephony service, said service selector operating to configure a relay block coupled to said derived telephony circuit and said analog lifeline path to switch said derived telephony station over to said analog lifeline path when said derived telephony service begins to deteriorate in quality.

2. The derived lifeline telephone service system using a DSL access circuit as set forth in claim 1, wherein said relay block comprises at least one relay having a common node that provides a tip-and-ring interface to said derived telephony station.

3. The derived lifeline telephone service system using a DSL access circuit as set forth in claim 2, wherein said service selector comprises means for reconfiguring said at least one relay such that said common node is bridged to said analog lifeline path when said derived telephony service is disrupted.

4. The derived lifeline telephone service system using a DSL access circuit as set forth in claim 2, wherein said service selector comprises means for reconfiguring said at least one relay such that said common node is bridged to said analog lifeline path when said service selector experiences a fault.

5. The derived lifeline telephone service system using a DSL access circuit as set forth in claim 2, wherein said service selector comprises means for reconfiguring said at least one relay such that said common node is bridged to said analog lifeline path when said service selector experiences a power disruption.

6. A derived lifeline telephony system, comprising:
a splitter coupled to an access network for separating signals into an analog signal portion and a plurality of data signal portions, wherein said analog signal portion supports an analog lifeline telephone service via an analog lifeline path;
a plurality of data modems coupled to said splitter to receive said plurality of data signal portions,
wherein a select one of said data modems is coupled to a data service path for providing a data service via a data service terminal;
a derived telephony network termination (NT) module coupled to at least a portion of said plurality of data modems, said derived telephony NT module providing a tip-and-ring interface to at least one derived telephony station for supporting a derived telephony service; and
a service selector including means for monitoring a predetermined condition, said service selector operating to configure a relay block to bridge said at least one derived telephony station to said analog lifeline path responsive to said predetermined condition encountered in said derived lifeline telephony system.

7. The derived lifeline telephony system as set forth in claim 6, wherein said predetermined condition comprises a power failure associated with said service selector.

8. The derived lifeline telephony system as set forth in claim 6, wherein said predetermined condition comprises a fault associated with said service selector.

9. The derived lifeline telephony system as set forth in claim 6, wherein said predetermined condition comprises a low quality of service condition associated with said derived telephony service.

10. The derived lifeline telephony system as set forth in claim 6, wherein said relay block comprises at least one relay having a common node that provides said tip-and-ring interface to said derived telephony station.

11. The derived lifeline telephony system as set forth in claim 10, wherein said service selector comprises means for reconfiguring said at least one relay such that said common node is bridged to said analog lifeline path responsive to said predetermined condition.

12. The derived lifeline telephony system as set forth in claim 11, wherein said predetermined condition comprises a power failure associated with said service selector.

13. The derived lifeline telephony system as set forth in claim 11, wherein said predetermined condition comprises a fault associated with said service selector.

14. The derived lifeline telephony system as set forth in claim 11, wherein said predetermined condition comprises a low quality of service associated with said derived telephony service.

15. A method for providing lifeline capability in a derived telephony system using a Digital Subscriber Line (DSL) access circuit, comprising the steps of:
splitting communication signals into an analog signal portion and at least one data signal portion;
providing said analog signal portion to at least one analog lifeline telephone station via an analog lifeline path;
providing said at least one data signal portion to a derived telephony circuit disposed in a derived telephony network termination (NT) module, said derived telephony circuit operating to support a derived telephony service via a relay block coupled to a derived telephone station; and
switching said derived telephone station to said analog lifeline path by actuating said relay block by a service selector responsive to a predetermined condition that is monitored in said derived telephony system.

16. The method for providing lifeline capability in a derived telephony system using a DSL access circuit as set forth in claim 15, wherein said predetermined condition monitored in said derived telephony system comprises a power failure condition associated with said service selector.

17. The method for providing lifeline capability in a derived telephony system using a DSL access circuit as set forth in claim 15, wherein said predetermined condition monitored in said derived telephony system comprises a fault condition associated with said service selector.

18. The method for providing lifeline capability in a derived telephony system using a DSL access circuit as set forth in claim 15, wherein said predetermined condition monitored in said derived telephony system comprises a low quality of service condition associated with said derived telephony service.
